# EUROPÄISCHE PATENTSCHRIFT

(11) **EP 2 392 746 B1**
(45) Veröffentlichungstag und Bekanntmachung des Hinweises auf die Patenterteilung: **23.01.2013**
(21) Anmeldenummer: 10006418.7
(22) Anmeldetag: 21.06.2010
(51) Int. Cl.: E04D 3/35, E04D 3/362, F24J 2/52, H01L 31/042

(54) **Gebäude-Paneel**
Building panel
Panneau d'immeuble

(30) Priorität: 01.06.2010 DE 102010022358
(43) Veröffentlichungstag der Anmeldung: 07.12.2011
(73) Patentinhaber: Niemetz Metall-GmbH, 96167 Königsfeld (DE)
(72) Erfinder: Niemetz, Alexander, 96167 Königsfeld (DE); Niemetz, Markus, 96167 Königsfeld (DE); Niemetz, Hermann, 96167 Königsfeld (DE)
(74) Vertreter: Führing, Dieter

(56) Entgegenhaltungen:
- EP-A2- 1 619 320
- EP-A2- 2 034 522
- WO-A2-2010/051999
- DE-A1-102008 009 608
- GB-A- 2 200 670

## Beschreibung

Die Erfindung betrifft ein Gebäude-Paneel gemäß dem Oberbegriff des Anspruchs 1.

Ein derartiges Gebäude-Paneel ist beispielsweise aus der DE-PS 30 42 952 bekannt. Dieses bekannte Gebäude-Paneel ist für Sonnenwärmekollektoren vorgesehen. Zu diesem Zwecke sind am Oberseitenblech des Gebäude-Paneels Rohre aus Kupfer oder aus einem ähnlichen Material angeordnet.

Ebenso offenbart die WO 2010/051999 A2 ein Gebäude-Paneel gemäß dem Oberbegriff des Anspruchs 1.

Der Erfindung liegt die Aufgabe zugrunde, ein Gebäude-Paneel der eingangs genannten Art zu schaffen, das einfach herstellbar insbesondere zur Befestigung an einem Gebäudedach und zur zeitsparenden und zuverlässigen Anbringung von Flächenelementen, wie Fotovoltaik-Flächenelementen o.dgl. vorgesehen ist.

Diese Aufgabe wird erfindungsgemäß durch die Merkmale des Anspruches 1, d.h. dadurch gelöst, dass jede Montage-Längsgrippe eine Höhenabmessung aufweist, die kleiner ist als die Höhenabmessung der Klemmprofilrippen, und dass jede Montage-Längsrippe eine sich nach oben verjüngenden trapezförmigen Querschnitt aufweist, dass das Oberseitenblech an den Montage-Längsgrippen mit in Längsrichtung voneinander beabstandeten Befestigunglöcherm ausgebildet ist, um miteinander eng vertundene Gebäude-Paneele an einer Dach-Unterkonstruktion mittels Befestigungselementen einfach zuverlässig befestigen zu können.

Flächenelement-Klemmeinrichtungen unterschiedlicher Ausbildungen sind bspw. in der DE 10 2007 036 208 A1 der Anmelderin offenbart.

Von dem ersten und dem dazu parallelen zweiten Längsrand des erfindungsgemäßen Gebäude-Paneel beabstandet steht jeweils eine formstabile Klemmprofil-Längsrippe vor, und von den formstabilen Klemmprofil-Längsrippen beabstandet stehen auf der von den Längsrändem des Gebäude-Paneels abgewandten Seite Montage-Längsrippen vor. Das erfindungsgemäße Gebäude-Paneel kann auch mehr als drei Klemmprofil-Längsrippen und mehr als zwei Montage-Längsrippen aufweisen.

Die Montage-Längsrippen dienen sowohl zur mechanischen Versteifung und Erhöhung der Formstabilität als auch zur einfachen und zuverlässigen Montage des Gebäude-Paneels bspw. auf einem Gebäudedach.

Mittig zwischen den formstabilen Klemmprofil-Längsrippen ist eine weitere Montage-Längsrippe vorgesehen.

Die jeweilige Klemmprofil-Längsrippe kann einen sich nach oben verjüngenden trapezförmigen Basisabschnitt und einen daran integral anschließenden, sich nach oben erweiternden, d.h. umgekehrt trapezförmigen Kopfabschnitt aufweisen. Der trapezförmige Basisabschnitt besitzt vorzugsweise eine Breiten- und Höhenabmessung, die größer ist als die Breiten- und Höhenabmessung des Kopfabschnittes der mindestens einen Klemmprofil-Längsrippe.

Bevorzugt kann es sein, wenn die Kopfabschnitte der Klemmprofil-Längsrippen jeweils eine Stimfläche aufweisen, die eine zum Unterseitenblech des Gebäude-Paneels parallele Ebene bestimmen. Hierdurch wird erreicht, dass das jeweilige, an einem erfindungsgemäßen Gebäude-Paneel mit Hilfe von Klemmeinrichtungen zu befestigendes Flächenelement, wie bspw. ein Fotovoltaik-Flächenelement, und das Gebäude-Paneel in einfacher Weise zuverlässig zueinander parallel ausgerichtet werden, bzw. im montierten Zustand zueinander parallel ausgerichtet sind.

Die mindestens eine Klemmprofil-Längsrippe kann auch jede andere Querschnittsform besitzen. Von Wichtigkeit ist nur, dass sie mit Hinterschneidungen bildenden Einschnürungen ausgebildet ist.

Jede Montage-Längsrippe weist einen sich nach oben verjüngenden trapezförmigen Querschnitt auf. Jede Montage-Längsrippe weist außerdem eine Höhenabmessung auf, die kleiner ist als die Höhenabmessung der mindestens drei Klemmprofil-Längsrippen, so dass die mindestens zwei Montage-Längsrippen die Montage eines Flächenelementes, wie bspw. eines Fotovoltaik-Flächenelementes o.dgl., nicht behindert. Jede Klemmprofil-Längsrippe besitzt vorzugsweise eine Höhenabmessung, die der Höhenabmessung der Verbindungs-Längsrippe des erfindungsgemäßen Gebäude-Paneels entspricht.

Das oben zu den Klemmprofil-Längsrippen Gesagte gilt für die Montage-Längsrippen entsprechend, d.h. die Montage-Längsrippen können jedes beliebige Querschnitts-Profil besitzen.

Um zwischen aneinander angrenzenden, d.h. im Montagezustand flächig aneinander anstoßenden Gebäude-Paneelen eine zuverlässige Abdichtung zu bewirken, durch die eine Kondenswasserbildung verhindert wird, ist es zweckmäßig, wenn das Unterseitenblech am ersten Längsrand des Gebäude-Paneels mit einer Wulstrippe und am zweiten Längsrand mit einer Längsaussparung für eine Wulstrippe ausgebildet ist, und wenn an der Wulstrippe ein Dichtungsband vorgesehen ist. Demselben Zwecke einer optimalen Abdichtung ist es dienlich, wenn am ersten Längsrand des Gebäude-Paneels zwischen dem Oberseitenblech und dem Unterseitenblech ein Dichtungsstreifen vorgesehen ist.

Weitere Einzelheiten, Merkmale und Vorteile ergeben sich aus der nachfolgenden Beschreibung der Erfindung an Hand der anliegenden Zeichnungen.

Es zeigen:
Figur 1 auf der linken Seite einen Abschnitt eines ersten Längsrandes einer Ausbildung des Gebäude-Paneels und auf der rechten Seite einen Abschnitt eines zweiten Längsrandes eines Gebäude-Paneels - jeweils in einer Querschnitt-Darstellung,
Figur 2 abschnittweise zwei flächig aneinander anliegende, d.h. aneinander angrenzende und miteinander verbundene Gebäude-Paneele in einer Querschnitt-Darstellung,
Figur 3 eine der Figur 2 ähnliche Schnittdarstellung zweier miteinander eng verbundener Gebäude-Paneele in Kombination mit einem abschnittweise gezeichneten Flächenelement, wie bspw. einem Fotovoltaik-Flächenelement, und mit einer Klemmeinrichtung für das Flächenelement,
Figur 4 eine der Figur 3 ähnliche abschnittweise Schnittdarstellung mit zwei Klemmeinrichtungen für ein abschnittweise gezeichnetes Flächenelement, und
Figur 5 einen Abschnitt eines Gebäude-Paneels sowie eine Klemmeinrichtung für ein abschnittweise gezeichnetes Flächenelement, wie einem Fotovoltaik-Flächenelement o.dgl.

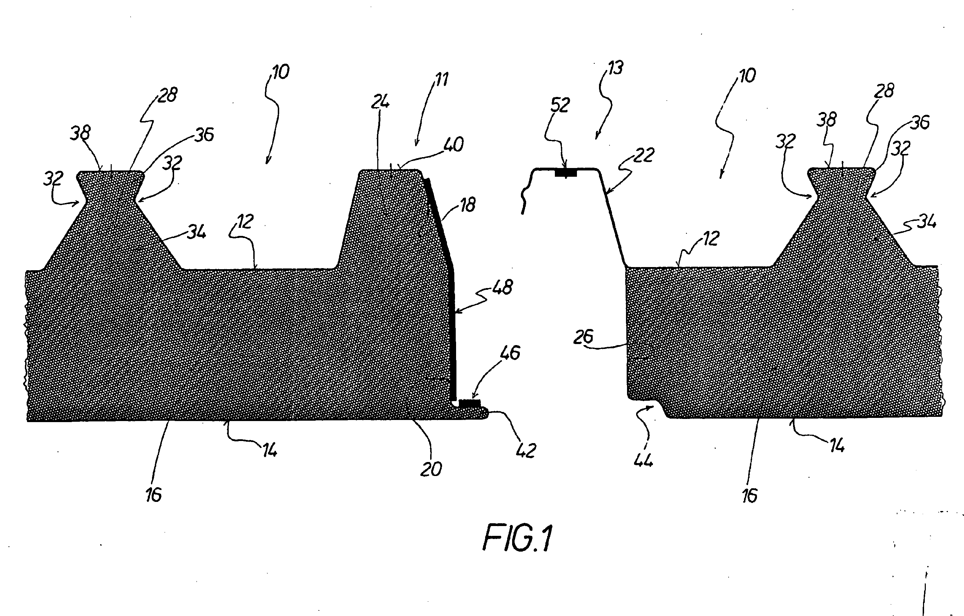

Figur 1 verdeutlicht abschnittweise auf der linken Seite einen ersten Längsrand eines Gebäude-Paneels 10 und auf der rechten Seite einen zweiten Längsrand eines Gebäude-Paneels 10. Das Gebäude-Paneel 10 weist ein Oberseitenblech 12, ein Unterseitenblech 14 und zwischen diesen Blechen 12 und 14 einen Schaumkern 16 auf. Der Schaumkern 16 weist Wärme isolierende Eigenschaften auf.

Das Oberseitenblech 12 endet am ersten Längsrand 11 mit einer Randkante 18. Das Unterseitenblech 14 endet am ersten Längsrand 11 mit einer Randkante 20. Die Randkanten 18 und 20 sind voneinander beabstandet, um eine unerwünschte Wärmeleitung zwischen dem Oberseitenblech 12 und dem Unterseitenblech 14 zu vermeiden.

Der zweite Längsrand 13 des Gebäude-Paneels 10 weist einen Überlappungs-Längsprofilabschnitt 22 auf, der aus dem Oberseitenblech 12 gebildet ist.

Der erste Längsrand 11 des Gebäude-Paneels 10 ist mit einer aus der Oberseite des Gebäude-Paneels 10 vorstehenden formstabilen Verbindungs-Längsrippe 24 ausgebildet. Der Überlappungs-Längsprofilabschnitt 22 am zweiten Längsrand 13 des jeweiligen Gebäude-Paneels 10 weist ein Querschnitts-Profil auf, das an die Randkontur des Querschnitts-Profils der Verbindungs-Längsrippe 24 angepaßt ist. Der Überlappungs-Längsprofilabschnitt 22 überlappt im zusammengebauten Zustand von Gebäude-Paneelen 10 die jeweils zugehörige Verbindungs-Längsrippe 24, so dass Niederschlagwasser nicht in den engen Spalt zwischen benachbarten Gebäude-Paneelen 10 eindringen kann.

Das Unterseitenblech 14 weist am zweiten Längsrand 13 eine Randkante 26 auf, die vom Oberseitenblech 12 beabstandet ist, um auch am zweiten Längsrand 13 eine unerwünschte Wärmeleitung zwischen dem Oberseitenblech 12 und dem Unterseitenblech 14 zu vermeiden.

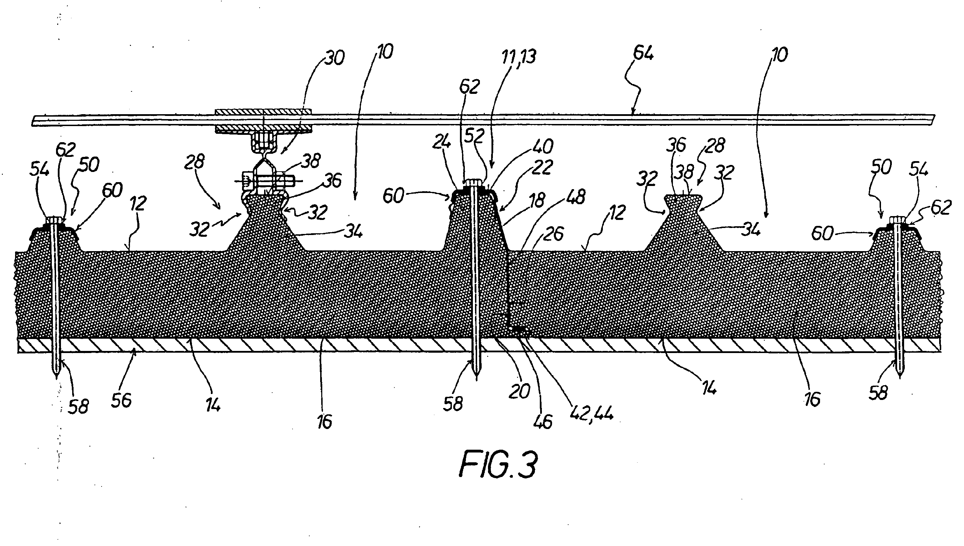

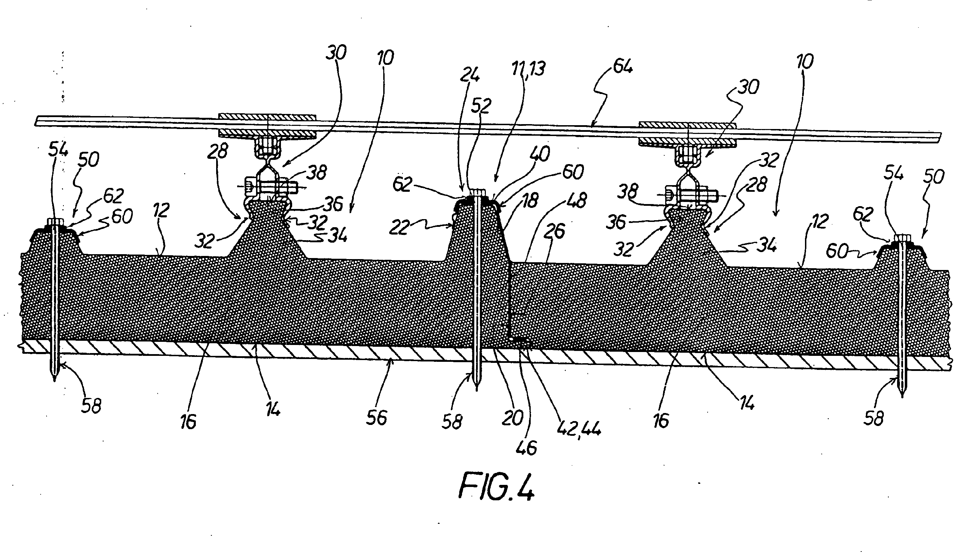

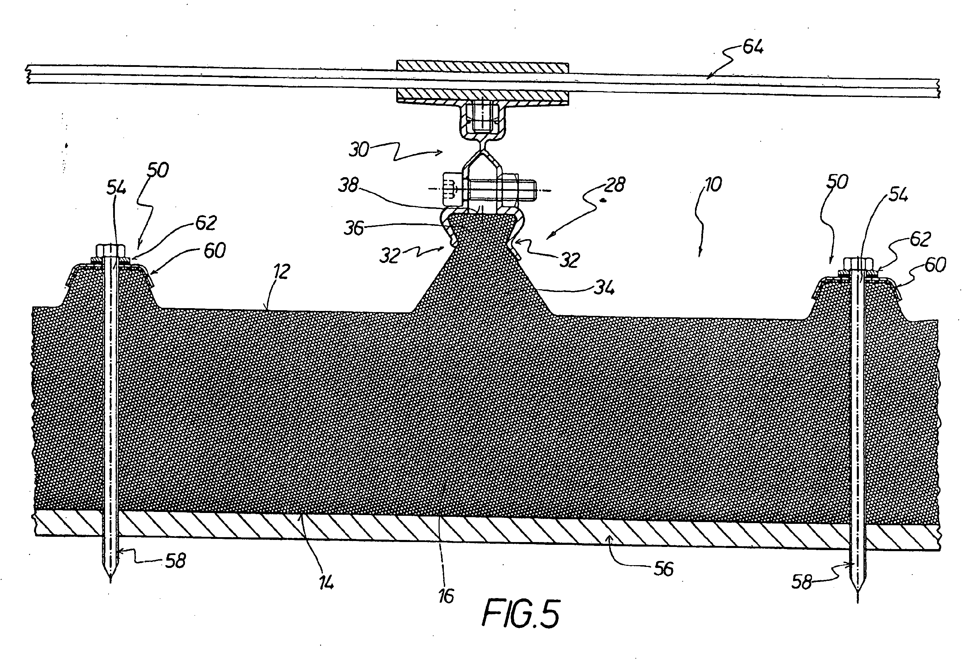

Aus dem Gebäude-Paneel 10 stehen erfindungsgemäß mindestens drei durch das Oberseitenblech 12 definierte formstabile Klemmprofil-Längsrippen 28 für eine Flächenelement-Klemmeinrichtung 30 (siehe die Figuren 3, 4 und 5) oberseitig weg. Die jeweilige Klemmprofil-Längsrippe 28 ist mit einander gegenüberliegenden Klemmeinschnürungen 32 ausgebildet. Durch die Klemmeinschnürungen 32 sind an der jeweiligen Klemmprofil-Längsrippe 28 ein trapezförmiger Basisabschnitt 34 und ein daran integral anschließender, sich nach oben erweiternder d.h. umgekehrt trapezförmiger Kopfabschnitt 36 bestimmt. Der Basisabschnitt 34 besitzt eine Breiten- und Höhenabmessung, die größer ist als die Breiten- und Höhenabmessung des Kopfabschnittes 36. Der Kopfabschnitt 36 der jeweiligen Klemmprofil-Längsrippe 28 weist eine Stirnfläche 38 auf, die eine zum Unterseitenblech 14 des Gebäude-Paneels 10 parallele Ebene bestimmt.

Die jeweilige Klemmprofil-Längsrippe 28 besitzt eine Höhenabmessung, die der Höhenabmessung der Verbindungs-Längsrippe 24 des Gebäude-Paneels 10 entspricht. Die Verbindungs-Längsrippe 24 weist eine Stirnfläche 40 auf, die mit der Stirnfläche 38 der jeweiligen Klemmprofil-Längsrippe 28 koplanar vorgesehen ist, d.h. die Stirnfläche 40 ist ebenfalls zum Unterseitenblech 14 parallel orientiert.

Das Unterseitenblech 14 ist am ersten Längsrand 11 des Gebäude-Paneels 10 mit einer Wulstrippe 42 und am zweiten Längsrand 13 mit einer für die Wulstrippe 42 eines benachbarten Gebäude-Paneels 10 vorgesehenen Längsaussparung 44 ausgebildet. An der Wulstrippe 42 ist ein Dichtungsband 42 angebracht. Am ersten Längsrand 11 des Gebäude-Paneels 10 ist zwischen dem Oberseitenblech 12 und dem Unterseitenblech 14 ein Dichtungsstreifen 48 vorgesehen. Durch das Dichtungsband 46 und den Dichtungsstreifen 48 ergibt sich zwischen eng benachbarten Gebäude-Paneelen 10 eine zuverlässige Abdichtung, so dass eine Kondenswasserbildung zwischen den eng benachbarten Gebäude-Paneelen 10 verhindert wird.

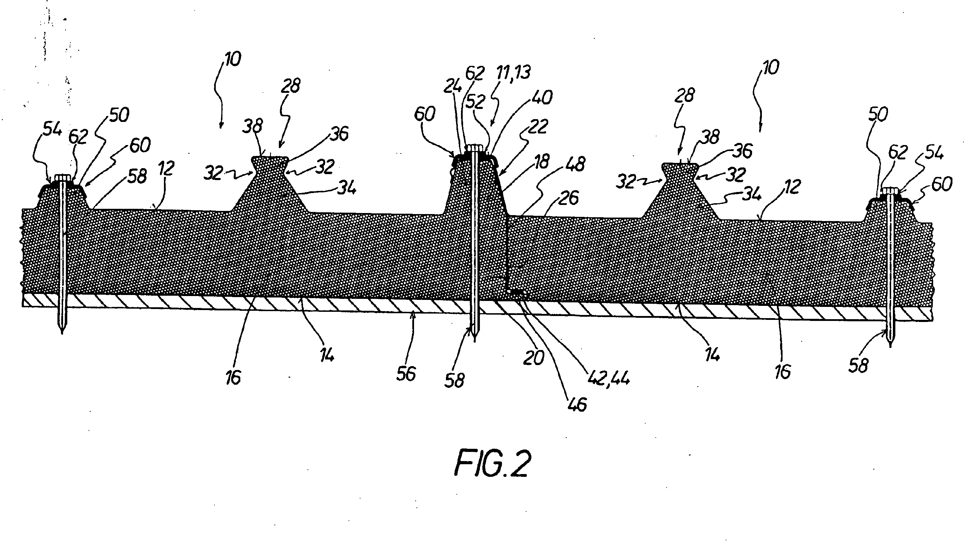

Aus den Figuren 2 bis 5, in welchen gleiche Einzelheiten mit den selben Bezugsziffern wie in Figur 1 bezeichnet sind, sind außer Klemmprofil-Längsrippen 28 auch Montage-Längsrippen 50 ersichtlich, die von den Klemmprofil-Längsrippen 28 beabstandet und zu diesen parallel vorgesehen sind. Die jeweilige Montage-Längsrippe 50 weist einen sich nach oben verjüngenden trapezförmigen Querschnitt auf. Die jeweilige Montage-Längsrippe 50 weist eine Höhenabmessung auf, die kleiner ist als die Höhenabmessung der Klemmprofil-Längsrippen 28 und der Verbindungs-Längsrippen 24 der Gebäude-Paneele 10.

Der Überlappungs-Längsprofilabschnitt 22 des jeweiligen Gebäude-Paneels 10 ist mit voneinander in Längsrichtung beabstandeten ersten Befestigungslöchern 52 ausgebildet. Außerdem ist das Oberseitenblech 12 an den Montage-Längsrippen 50 mit in Längsrichtung voneinander beabstandeten zweiten Befestigungslöchern 54 ausgebildet, um miteinander eng verbundene Gebäude-Paneele 10 an einer Dach-Unterkonstruktion 56 mittels Befestigungselementen 58 einfach zuverlässig befestigen zu können. Bei den Befestigungselementen 58 handelt es sich bspw. um Gewindestifte o.dgl. Die Befestigungselemente 58 sind mit Beilegkappen 60 und mit Beilegscheiben 62 kombiniert.

Die Figuren 3, 4 und 5 verdeutlichen abschnittweise Gebäude-Paneele 10 und Klemmeinrichtungen 30 für abschnittweise gezeichnete Flächenelemente 64, bei welchen es sich z.B. um Fotovoltaik-Flächenelemente handelt.

Mit Hilfe erfindungsgemäßer Gebäude-Paneele 10 ist es einfach, zeitsparend und zuverlässig möglich, Flächenelemente 64 mittels Klemmeinrichtungen 30 an Gebäude-Paneelen 10 zu befestigen, wobei die Gebäude-Paneele 10 an der jeweiligen Dach-Unterkonstruktion sicher und zuverlässig befestigbar sind.

In den Zeichnungen sind die Gebäude-Paneele 10 mit zum Unterseitenblech 14 senkrechten Randflächen gezeichnet. Es versteht sich, dass die Randflächen mit dem Unterseitenblech auch einen vom rechten Winkel abweichenden Winkel einschließen können.

### Bezugsziffernliste:

- 10: Gebäude-Paneel
- 11: erster Längsrand (von 10)
- 12: Oberseitenblech (von 10)
- 13: zweiter Längsrand (von 10)
- 14: Unterseitenblech (von 10)
- 16: Schaumkern (zwischen 12 und 14)
- 18: Randkante (von 12)
- 20: Randkante (von 14)
- 22: Überlappungs-Längsprofilabschnitt (bei 13)
- 24: Verbindungs-Längsrippe (von 10 bei 11)
- 26: Randkante (von 14)
- 28: Klemmprofil-Längsrippe (von 10 für 30)
- 30: Klemmeinrichtung (für 64)
- 32: Klemmeinschnürungen (von 28)
- 34: Basisabschnitt (von 28)
- 36: Kopfabschnitt (von 28)
- 38: Stirnfläche (von 36)
- 40: Stirnfläche (von 24)
- 42: Wulstrippe (von 10 an 11)
- 44: Längsaussparung (von 10 bei 13)
- 46: Dichtungsband (an 42)
- 48: Dichtungsstreifen (zwischen 12 und 14 ab 11)
- 50: Montage-Längsrippe (von 10)
- 52: erste Befestigungslöcher (in 22)
- 54: zweite Befestigungslöcher (in 12 bei 50)
- 56: Dach-Unterkonstruktion
- 58: Befestigungselemente (für 10)
- 60: Beilegkappe (für 58)
- 62: Beilegscheibe (für 58)
- 64: Flächenelement

## Patentansprüche

1. Gebäude-Paneel mit einem Oberseitenblech (12), einem Unterseitenblech (14) und einem zwischen dem Oberseitenblech (12) und dem Unterseitenblech (14) vorgesehenen Schaumkern (16), wobei das Gebäude-Paneel (10) einen ersten Längsrand (11) mit einer aus der Oberseite des Gebäude-Paneels (10) vorstehenden, formstabilen Verbindungs-Längsrippe (24) und einen zweiten Längsrand (13) mit einem Überlappungs-Längsprofilabschnitt (22) aufweist, der aus dem Oberseitenblech (12) gebildet ist und dessen Profil an die Randkontur des Querschnitts-Profils der Verbindungs-Längsrippe (24)angepaßt ist, wobei von dem ersten und dem zweiten Längsrand (11 und 13) des Gebäude-Paneels (10) beabstandet jeweils eine formstabile Klemmprofil-Längsrippe (28) vorsteht, und wobei von den formstabilen Klemmprofil-Längsrippen (28) beabstandet auf der von den beiden Längsrändern (11, 13) des Gebäude-Paneels (10) abgewandten Seite jeweils eine Montage-Längsrippe (50) vorsteht und wobei mittig zwischen den Montage-Längsrippen (28) mindestens eine weitere formstabile Klemmprofil-Längsrippe (28) vorgesehen ist, **dadurch gekennzeichnet, dass** jede Montage-Längsrippe (50) eine Höhenabmessung aufweist, die kleiner ist als die Höhenabmessung der Klemmprofil-Längsrippen (28),
und dass
jede Montage-Längsrippe (50) einen sich nach oben verjüngenden trapezförmigen Querschnitt aufweist, dass das Oberseitenblech (12) an den Montage-Längsrippen (50) mit in Längsrichtung voneinander beabstandeten Befestigungslöchern (54) ausgebildet ist, um miteinander eng verbundene Gebäude-Paneele (10) an einer Dach-Unterkonstruktion (56) mittels Befestigungselementen (58) einfach zuverlässig befestigen zu können.

2. Gebäude-Paneel nach Anspruch 1,
**dadurch gekennzeichnet,**
**dass** die jeweilige Klemmprofil-Längsrippe (28) einen sich nach oben verjüngenden trapezförmigen Basisabschnitt (34) und einen daran integral anschließenden, sich nach oben erweiternden, d.h. umgekehrt trapezförmigen Kopfabschnitt (36) aufweist.

3. Gebäude-Paneel nach Anspruch 2,
**dadurch gekennzeichnet,**
**dass** der trapezförmige Basisabschnitt (34) eine Breiten- und Höhenabmessung besitzt, die größer ist als die Breiten- und Höhenabmessung des Kopfabschnittes (36) der jeweiligen Klemmprofil-Längsrippe (28).

4. Gebäude-Paneel nach Anspruch 2,
**dadurch gekennzeichnet,**
**dass** der Kopfabschnitt (36) der jeweiligen Klemmprofil-Längsrippe (28) eine Stirnfläche (38) aufweist, die eine zum Unterseitenblech (14) des Gebäude-Paneels (10) parallele Ebene bestimmt.

5. Gebäude-Paneel nach einem der Ansprüche 1 bis 4,
**dadurch gekennzeichnet,**
**dass** die jeweilige Klemmprofil-Längsrippe (28) eine Höhenabmessung besitzt, die der Höhenabmessung der Verbindungs-Längsrippe (24) entspricht.

6. Gebäude-Paneel nach einem der Ansprüche 1 bis 5,
**dadurch gekennzeichnet,**
**dass** das Unterseitenblech (14) am ersten Längsrand (11) des Gebäude-Paneels (10) mit einer Wulstrippe (42) und am zweiten Längsrand (13) mit einer Längsaussparung (46) für eine Wulstrippe (42) ausgebildet ist, und dass an der Wulstrippe (44) ein Dichtungsband (46) vorgesehen ist.

7. Gebäude-Paneel nach einem der Ansprüche 1 bis 6,
**dadurch gekennzeichnet,**
**dass** am ersten Längsrand (11) des Gebäude-Paneels (10) zwischen dem Oberseitenblech (12) und dem Unterseitenblech (14) ein Dichtungsstreifen (48) vorgesehen ist.

## Claims

1. Building panel having a top plate (12), a bottom plate (14) and a foam core (16) provided between the top plate (12) and the bottom plate (14), wherein the building panel (10) has a first longitudinal edge (11) with a dimensionally stable connecting longitudinal rib (24) projecting from the top side of the building panel (10) and a second longitudinal edge (13) with an overlapping longitudinal profile portion (22) which is formed from the top plate (12) and whose profile is matched to the edge contour of the cross-sectional profile of the connecting longitudinal rib (24), wherein in each case a dimensionally stable clamping profile longitudinal rib (28) projects at a distance from the first and the second longitudinal edge (11 and 13) of the building panel (10), and wherein in each case a mounting longitudinal rib (50) projects at a distance from the dimensionally stable clamping profile longitudinal ribs (28) on the side facing away from the two longitudinal edges (11, 13) of the building panel (10), and wherein at least one further dimensionally stable clamping profile longitudinal rib (28) is provided centrally between the mounting longitudinal ribs (50), **characterized in that** each mounting longitudinal rib (50) has a height dimension which is less than the height dimension of the clamping profile longitudinal ribs (28), and **in that** each mounting longitudinal rib (50) has an upwardly tapering trapezoidal cross section, and **in that** the top plate (12) is formed at the mounting longitudinal ribs (50) with fastening holes (54) spaced apart from one another in the longitudinal direction in order that closely interconnected building panels (10) can be reliably fastened in a simple manner to a roof substructure (56) by means of fastening elements (58).

2. Building panel according to Claim 1, **characterized in that** the respective clamping profile longitudinal rib (28) has an upwardly tapering trapezoidal base portion (34) and an integrally adjoining, upwardly extending, i.e. inversely trapezoidal, head portion (36).

3. Building panel according to Claim 2, **characterized in that** the trapezoidal base portion (34) has a width and height dimension which is greater than the width and height dimension of the head portion (36) of the respective clamping profile longitudinal rib (28).

4. Building panel according to Claim 2, **characterized in that** the head portion (36) of the respective clamping profile longitudinal rib (28) has an end face (38) which defines a plane parallel to the bottom plate (14) of the building panel (10).

5. Building panel according to one of Claims 1 to 4, **characterized in that** the respective clamping profile longitudinal rib (28) has a height dimension which corresponds to the height dimension of the connecting longitudinal rib (24).

6. Building panel according to one of Claims 1 to 5, **characterized in that** the bottom plate (14) is formed with a bead rib (42) on the first longitudinal edge (11) of the building panel (10) and with a longitudinal recess (46) for a bead rib (42) on the second longitudinal edge (13), and **in that** a sealing band (46) is provided on the bead rib (44).

7. Building panel according to one of Claims 1 to 6, **characterized in that** a sealing strip (48) is provided on the first longitudinal edge (11) of the building panel (10) between the top plate (12) and the bottom plate (14).

## Revendications

1. Panneau d'immeuble comprenant une tôle de face supérieure (12), une tôle de face inférieure (14) et un noyau en mousse (16) prévu entre la tôle de face supérieure (12) et la tôle de face inférieure (14), le panneau d'immeuble (10) comprenant un premier bord longitudinal (11) présentant une nervure longitudinale de liaison (24) à stabilité de forme faisant saillie hors de la face supérieure du panneau d'immeuble (10) et un deuxième bord longitudinal (13) présentant une section profilée longitudinale de chevauchement (22) qui est formée à partir de la tôle de face supérieure (12) et dont le profil est adapté au contour de bord du profil en section transversale de la nervure longitudinale de liaison (24), une nervure longitudinale de profilé de serrage (28) respective à stabilité de forme faisant saillie à distance du premier et du deuxième bord longitudinal (11 et 13) du panneau d'immeuble (10) et une nervure longitudinale de montage (50) respective faisant saillie à distance des nervures longitudinales de profilé de serrage (28) à stabilité de forme sur le côté opposé aux deux bords longitudinaux (11, 13) du panneau d'immeuble (10) et au moins une autre nervure longitudinale de profilé de serrage (28) à stabilité de forme étant prévue de manière centrale entre les nervures longitudinales de montage (50), **caractérisé en ce que** chaque nervure longitudinale de montage (50) présente une dimension en hauteur qui est inférieure à la dimension en hauteur des nervures longitudinales de profilé de serrage (28), **en ce que** chaque nervure longitudinale de montage (50) présente une section transversale trapézoïdale se rétrécissant vers le haut, et **en ce que** la tôle de face supérieure (12) est réalisée au niveau des nervures longitudinales de montage (50) avec des trous de fixation (54) espacés les uns des autres dans la direction longitudinale, afin de pouvoir fixer de manière fiable et simple des panneaux d'immeuble (10) reliés étroitement les uns aux autres à une sous-structure de toit (56) au moyen d'éléments de fixation (58).

2. Panneau d'immeuble selon la revendication 1,
**caractérisé en ce que**
la nervure longitudinale de profilé de serrage (28) respective présente une section de base (34) trapézoïdale se rétrécissant vers le haut et une section de tête (36) s'élargissant vers le haut, c'est-à-dire trapézoïdale inversée, s'y raccordant d'un seul tenant.

3. Panneau d'immeuble selon la revendication 2,
**caractérisé en ce que**
la section de base (34) trapézoïdale possède une dimension en largeur et en hauteur qui est supérieure à la dimension en largeur et en hauteur de la section de tête (36) de la nervure longitudinale de profilé de serrage (28) respective.

4. Panneau d'immeuble selon la revendication 2,
**caractérisé en ce que**
la section de tête (36) de la nervure longitudinale de profilé de serrage (28) respective présente une surface frontale (38) qui définit un plan parallèle à la tôle de face inférieure (14) du panneau d'immeuble (10).

5. Panneau d'immeuble selon l'une quelconque des revendications 1 à 4,
**caractérisé en ce que**
la nervure longitudinale de profilé de serrage (28) respective possède une dimension en hauteur qui correspond à la dimension en hauteur de la nervure longitudinale de liaison (24).

6. Panneau d'immeuble selon l'une quelconque des revendications 1 à 5,
**caractérisé en ce que**
la tôle de face inférieure (14) est réalisée au niveau du premier bord longitudinal (11) du panneau d'immeuble (10) avec une nervure de renflement (42) et au niveau du deuxième bord longitudinal (13) avec un évidement longitudinal (46) pour une nervure de renflement (42) et **en ce qu'**une bande d'étanchéité (46) est prévue sur la nervure de renflement (44).

7. Panneau d'immeuble selon l'une quelconque des revendications 1 à 6,
**caractérisé en ce**
**qu'**un ruban d'étanchéité (48) est prévu sur le premier bord longitudinal (11) du panneau d'immeuble (10) entre la tôle de face supérieure (12) et la tôle de face inférieure (14).
